# EUROPEAN PATENT SPECIFICATION

(11) **EP 2 928 678 B1**
(45) Date of publication and mention of the grant of the patent: **29.03.2017**
(21) Application number: 13848142.9
(22) Date of filing: 09.12.2013
(51) Int. Cl.: B29D 30/24, B29D 30/32

(54) **PROCESS AND APPARATUS FOR MANUFACTURING OF TIRES FOR VEHICLE WHEELS**
VERFAHREN UND VORRICHTUNG ZUR HERSTELLUNG VON REIFEN FÜR FAHRZEUGRÄDER
PROCÉDÉ ET APPAREIL POUR PRODUIRE DES PNEUS POUR ROUES DE VÉHICULE

(30) Priority: 10.12.2012 IT MI20122096; 10.12.2012 US 201261735212 P
(43) Date of publication of application: 14.10.2015
(73) Proprietor: Pirelli Tyre S.p.A., 20126 Milano (IT)
(72) Inventor: MANCINI, Gianni, I-20126 Milano (IT); MARCHINI, Maurizio, I-20126 Milano (IT)
(74) Representative: Castiglia, Paolo
(86) International application number: PCT/IB2013/060740
(87) International publication number: WO 2014/091387

(56) References cited:
- WO-A1-2004/060644
- WO-A1-2012/042359
- DE-A1- 3 908 502

## Description

The present invention relates to a process and an apparatus for producing tyres for vehicle wheels.

A tyre for vehicle wheel generally comprises a carcass structure comprising at least one carcass ply formed by reinforcing cords embedded in an elastomeric matrix. The carcass ply has end edges respectively engaged with annular anchoring structures. The latter are arranged in the areas of the tyre usually identified by the name of "beads" and each of them is normally formed by a substantially circumferential annular insert on which at least one filling insert is applied, in a radially outer position thereof. Such annular inserts are commonly identified as "bead cores" and have the task of keeping the tyre firmly fixed to the anchoring seat specifically provided in the rim of the wheel, thus preventing, in operation, the radially inner end edge of the tyre coming out from such seat.

Specific reinforcing structures having the function of improving the torque transmission to the tyre may be provided at the beads..

A belt structure is associated in a radially outer position with respect to the carcass structure, the belt structure comprising one or more than one belt layers arranged radially one on top of the other and having textile or metal reinforcing cords with crossed orientation and/or an orientation substantially parallel to the direction of circumferential extension of the tyre.

Between the carcass structure and the belt structure a layer of elastomeric material, known as "under-belt", can be provided, said layer having the function of making the radially outer surface of the carcass structure as uniform as possible for the subsequent application of the belt structure.

A tread band is applied at a radially outer position with respect to the belt structure, the tread band being made of elastomeric material too.

Between the tread band and the belt structure a so-called "under-layer" of elastomeric material can be arranged, said under-layer having properties suitable for ensuring a steady union of the tread band itself.

On the side surfaces of the carcass structure respective sidewalls of elastomeric material are also applied, each sidewall extending from one of the side edges of the tread band up to the respective annular anchoring structure to the beads.

The expression "elastomeric material" is used to indicate a composition comprising at least one elastomeric polymer and at least one reinforcing filler. Preferably, such composition further comprises additives such as, for example, a cross-linking agent and/or a plasticizer. Thanks to the provision of the cross-linking agent, such material may be cross-linked by heating, so as to make the end product.

The terms "radial" and "axial" and the expressions "radially inner/outer" and "axially inner/outer" are used with reference to the radial direction and to the axial direction of a forming support being used. The terms "circumferential" and "circumferentially" instead, are used referring to the annular extension of the forming support.

The traditional processes for manufacturing tyres for vehicle wheels essentially provide for the components of the tyre listed above to be firstly made separate from one another as semi-finished products to be then assembled on a proper forming drum.

With particular reference to the carcass structure, building the carcass structure typically comprises depositing the carcass ply/plies on a forming support that is rotatable around a respective rotation axis, positioning the annular anchoring structure on a respective end edge of the carcass ply/plies and turning up the end edge of the carcass ply/plies around the respective annular anchoring structure. WO 2012/042359 discloses these steps.

Hereafter reference will be made without distinction both to tyres comprising a single carcass ply and to tyres comprising many carcass plies. For the sake of simplicity of explanation, reference will be often made to one carcass ply. What is described with reference to one carcass ply must however be considered valid for many carcass plies too.

US 3,772,125 illustrates a pair of support elements that are rotatable and axially movable with respect to a carcass building drum of the contractible type. The support elements comprise a ferrule and, in a radially inner position with respect to the ferrule, a disc provided with a plurality of carcass ply pulling-down fingers. The disc is axially movable with respect to the ferrule. The ferrule and the disc are brought into a position adjacent to the drum to support the end portions of a carcass ply when it is deposited on the drum. The ferrule and the disc are then moved away from the drum. The disc is then moved close to the drum to allow the aforementioned fingers to come into contact with the end portions of the carcass ply. Thereafter, the ferrule is moved close to the drum to pull down the fingers and, consequently, the end portions of the carcass ply.

WO 2006/003058 describes a method for manufacturing a radial tyre on a building machine comprising an expandable cylindrical drum. Two support elements provided with respective air chambers are arranged at the sides of the drum to support the ends of a component of the tyre deposited on the drum. A bead core is deposited on each of the aforementioned ends. Such ends are folded over the respective bead cores through the inflation of the air chambers. At least during an inflation step of the air chambers the support elements are moved away from the drum.

US 7,837,816 describes a method for building a radial tyre on a building machine provided with an expandable carcass building drum and with two support elements, also expandable, arranged on axially opposite sides of the drum to support the end portions of the carcass ply when it is deposited on the drum. The support elements are provided with respective inflatable air chambers to fold the end portions of the carcass ply over respective bead cores.

DE 3908502, which is the closest prior art, and WO 2004/060644 are further documents disclosing the use of a pair of support elements for supporting end portions of the carcass ply when it is deposited on a drum.

The Applicant has observed that, in conventional processes for building radial tyres, each carcass ply is defined by a piece of ply previously cut to size and deposited along the entire circumferential extension of the forming support (many pieces of ply are deposited in succession one on the other on the forming support in the case of tyres with many plies). Each ply (or piece of ply) is joined on the forming support and comprises a plurality of metallic or textile cords that are parallel to one another and oriented substantially parallel to the rotation axis of the forming support (the deviation from being completely parallel is of few degrees in two-ply tyres), i.e. substantially perpendicular to the direction of rotation of the tyre.

The Applicant has also observed that building high-quality radial tyres requires, amongst other things, a carcass ply to be made having a high degree of regularity and uniformity both in the circumferential direction and in the axial direction. For this purpose, according to the Applicant it is necessary to pay particular attention both to the positioning of the ply on the forming support, so as not to have undesired gaps or overlapping, and to the joint of the ply itself, so as to maintain a desired structural continuity.

The Applicant has verified that in order to make a carcass ply having the desired high degree of regularity and uniformity it is advantageous to use, when depositing the ply on the forming support, suitable support elements for supporting the opposite axial end edges of the aforementioned ply. Such support elements do indeed ensure, together with the forming support, a complete support of the ply along the entire axial extension thereof, thus ensuring high precision and repeatability of deposition and, consequently, high quality of the various joints.

The Applicant has also observed that the use of the aforementioned support elements allows an advantageous automation of the building operations of the carcass structure. Indeed, in the absence of such support elements the jointing of the end edges of the carcass ply necessarily requires a manual intervention, which goes contrary to the production capacity, precision and repeatability of the jointing operation.

However, the Applicant has noted that in processes and/or apparatuses in which the carcass structure is built in a single work station (hereafter: first phase single-station building processes and/or apparatuses), i.e. without any transfer of the forming support, the presence of the aforementioned support elements, although on the one hand facilitates the operations of depositing the carcass ply, on the other hand hinders the subsequent operations of positioning the annular anchoring structure on the respective end edge of the carcass ply and turning up such an end edge of the carcass ply around the respective annular anchoring structure. These operations indeed require suitable positioning and turning-up devices to be moved in the areas adjacent to the opposite axial end portions of the forming support, i.e. right in the areas in which the aforementioned support elements operate.

The Applicant has also noted that it is desirable to provide for first phase single-station building processes and/or apparatuses since they allow to achieve an advantageous compactness of the layout, with consequent reduction of installation costs.

With the goal of achieving the advantages discussed above (i.e. high regularity and uniformity of the carcass ply, automation of the process and compactness of the layout), the Applicant has perceived the need to carry out a first phase single-station building process in which elements are used that allow the end edges of each carcass ply to be supported in the deposition operations of the carcass ply on the forming support, taking care of avoiding such elements to be a hindrance to carry out the subsequent operations of positioning the annular anchoring structure and turning up the end edge of the carcass ply around said annular anchoring structure.

In this respect, the Applicant has realised that it is advantageous to use support elements for the end edges of the carcass ply that are axially movable with respect to the forming support and radially expandable/contractible.

The Applicant has finally found that in the operations of depositing the carcass ply on the forming support such support elements can be arranged close to the forming support and set at a predetermined first diameter correlated to the diameter of the forming support, in this way ensuring the desired complete support of the ply along the entire axial extension thereof, whereas after completing the carcass ply on the forming support such elements can be moved away from the forming support and set at a diameter that is greater than the first diameter, in this way setting themselves into a position and configuration such as not to be a hindrance to carry out the operations of positioning the annular anchoring structures on the opposite end edges of the carcass ply and turning up each of such end edges around the respective annular anchoring structure.

Therefore, in a first aspect thereof the present invention relates to a process for producing tyres for vehicle wheels, comprising building a carcass structure on a forming support having a rotation axis.

Building said carcass structure preferably comprises arranging a pair of annular support elements in a first operative position, in which each annular support element is axially adjacent to a respective axial end portion of said forming support and has a predetermined first diameter to form a support surface for a respective axial end edge of at least one carcass ply.

Building said carcass structure preferably comprises depositing said at least one carcass ply on said forming support and said pair of annular support elements.

Building said carcass structure preferably comprises bringing said pair of annular support elements into a second operative position in which each annular support element is axially distant from said forming support and has a second diameter that is greater than said first diameter.

Building said carcass structure preferably comprises associating a respective annular anchoring structure with each of said opposite axial end edges.

The Applicant believes that the process of the present invention makes it possible to carry out the operations of depositing the carcass ply/plies, positioning the annular anchoring structures and turning up end edge of the carcass ply/plies around the respective annular anchoring structure in the design conditions. More precisely, the operations of depositing the carcass ply on the forming support are carried out after having previously positioned the annular support elements of the axial end edges of the carcass ply close to the forming support and set such annular support elements at a predetermined reference diameter, preferably equal to the diameter of the forming support. In this way it is ensured that the carcass ply is completely supported along its entire axial extension. Thereafter, the operations of positioning the annular anchoring structures on the opposite axial end edges of the carcass ply and of turning up each of such axial end edges around the respective annular anchoring structure are carried out after having positioned the annular support elements into a distal position from the forming support and set such annular support elements at a diameter that is greater (even much greater) than the initial diameter. In this way it is ensured that the aforementioned positioning and turning up operations are carried out when the annular support elements are in an "outside working area" position.

In a second aspect thereof, the present invention relates to an apparatus for producing tyres for vehicle wheels, comprising a forming support having a rotation axis.

The apparatus preferably comprises a deposition device for depositing at least one carcass ply on said forming support.

The apparatus preferably comprises, in each of the areas axially opposite with respect to the forming support, a device for positioning an annular anchoring structure on a respective axial end edge of said at least one carcass ply.

The apparatus preferably comprises, in each of the areas axially opposite with respect to the forming support, an annular support element axially movable with respect to said forming support between a first operative position in which said annular support element is axially adjacent to the forming support and a second operative position in which said annular support element is axially distant from the forming support.

Preferably, said annular support element is radially expandable and contractible in order to be adjusted to a predetermined first diameter when it is in said first operative position and to a second diameter that is greater than said first diameter when it is in said second operative position.

The present invention, in at least one of the aforementioned aspects, can have at least one of the following preferred characteristics.

Preferably, arranging said pair of annular support elements in said first operative position comprises coupling each of said annular support elements with said forming support so that said annular support element can rotate in synchrony with said forming support. In this way, the annular support elements can rotate around the rotation axis of the forming support in synchrony with the forming support, thus ensuring the desired axial support for all of the semi-finished products each time being deposited on the forming support.

Preferably, the invention comprises, after having associated the respective annular anchoring structure with each of said axial end edges and while said pair of annular support elements is in said second operative position, turning up each of said axial end edges around the respective annular anchoring structure through inflation of a respective air chamber. Advantageously, the inflation of the air chamber takes place while the annular support elements are in the "outside working area" position, thus avoiding risks of interference between air chamber and annular support elements during the inflation of the air chamber.

In preferred embodiments thereof, the invention comprises, after the inflation of said air chamber, pressing said air chamber against said forming support through a respective annular support element of said pair of annular support elements. In this way, an advantageous consolidation of the turned up end edge of the carcass ply on the annular anchoring structure and of the latter on the carcass ply is obtained. Such consolidation is advantageously obtained using structural elements (that is, the annular support elements) already provided for carrying out other tasks (supporting the axial end edges of the carcass ply or of other semi-finished products during deposition on the forming support); this involves an advantageous design and process saving and a consequent reduction of the manufacturing and production costs.

Preferably, pressing said air chamber against said forming support comprises axially moving said annular support element from said second operative position towards said forming support.

Preferably, axially moving said annular support element from said second operative position towards said forming support comprises bringing said annular support element to a third operative position in which it is arranged in a radially outer position with respect to the respective axial end portion of said forming support. The pressure exerted on the air chamber is in this way particularly effective, since it is generated by a thrusting force having, on the air chamber, both a substantially axial thrusting component and a substantially radial thrusting component.

Preferably, during the aforementioned movement the annular support element remains set on said second diameter. Any risk of mechanical interference with other devices or members is thus avoided.

Preferably, pressing said air chamber against said forming support comprises radially contracting said annular support element. In this way a high thrusting component in a substantially radial direction is obtained, which makes the turning up action of the end edge of the carcass ply and the consequent consolidation of the annular anchoring structure on the carcass ply particularly effective.

More preferably, radially contracting said annular support element comprises reducing the diameter of said annular support element from said second diameter to a third diameter that is greater than said first diameter.

In preferred embodiments thereof the invention comprises, when said annular support element is in said first operative position, coupling a first axial end face of said annular support element with a respective axial end face of said forming support. In this way, the annular support elements can be dragged in rotation by the forming support, thus without needing to provide for a motion control members distinct from those provided for controlling the rotation of the forming support.

Preferably, coupling said first axial end face of said annular support element with the respective axial end face of said forming support comprises exerting a magnetic attraction force between said first axial end face of said annular support element and the respective axial end face of said forming support. In this way it is possible to make a stable and effective coupling with mechanical devices that are extremely simple and, therefore, inexpensive.

In preferred embodiments of the invention, arranging said pair of annular support elements in said first operative position comprises coupling each annular support element with a respective transfer device and moving said transfer device towards said forming support until said annular support element reaches said first operative position.

Preferably, bringing said pair of annular support elements in said second operative position comprises coupling each annular support element with the respective transfer device and moving said transfer device away from said forming support until said annular support element reaches said second operative position. Advantageously, the axial movements of the annular support elements from the first operative position to the second operative position are obtained using transfer devices that, preferably, also make it possible to obtain the contraction and expansion of the annular support elements. This implies an advantageous design and process saving.

Preferably, while said annular support element is in said second operative position it remains coupled with said transfer device. Such a transfer device thus also acts as a support member of the respective annular support element when the latter is in its second operative position.

In preferred embodiments of the invention, bringing said annular support element to a third operative position comprises moving said transfer device from said second operative position towards said forming support until said annular support element reaches said third operative position. Advantageously, the axial movements of the annular support elements from the second operative position to the third operative position are obtained using the same transfer devices used to bring the annular support elements from the first operative position to the second operative position.

Preferably, while said annular support element is in said third operative position it remains coupled with said transfer device. Such a transfer device thus also acts as a support member of the respective annular support element when the latter is in its third operative position.

Preferably, said forming support has a predetermined deposition diameter and said first diameter is substantially equal to said deposition diameter. A deposition surface of the semi-finished products is thus made that is substantially rectilinear in the axial direction (i.e. without steps), to the benefit of the precision and uniformity of deposition of such semi-finished products (for example liner, under-liner, anti-abrasive element, carcass ply/plies).

Preferably, the invention further comprises:
- building a crown structure comprising at least one belt layer and a tread band;
- associating said carcass structure with said crown structure;
- toroidally shaping said carcass structure and said crown structure.

In the preferred embodiments of the present invention, when said annular support element is in said first operative position it is coupled with said forming support and it can rotate in synchrony with said forming support.

Preferably, said annular support element is axially movable from said second operative position to a third operative position in which it is in a radially outer position with respect to a respective axial end portion of said forming support.

Preferably, when said annular support element is in said third operative position it has a third diameter that is smaller than said second diameter and greater than said first diameter.

The invention preferably comprises, in each of said areas axially opposite with respect to said forming support, a respective inflatable air chamber.

Preferably, said air chamber is arranged in a radially inner position with respect to said annular support element when said annular support element is in said first operative position.

In preferred embodiments of the invention, said annular support element comprises a plurality of first angular sectors circumferentially adjacent to one another and radially movable in a synchronous manner.

Preferably, each of said first angular sectors comprises a coupling device for coupling with an axial end portion of said forming support.

Preferably, said coupling device is of the magnetic type.

More preferably, said coupling device comprises at least one first magnet housed in a first axial end portion of said first angular sectors and configured to cooperate with at least one second magnet housed in said axial end portion of said forming support.

Preferably, each of said first angular sectors comprises a centring device with said forming support.

More preferably, said centring device comprises at least one pin extending canti-levered from each of said first angular sectors and configured to be housed in a respective hole formed in an axial end portion of said forming support.

In preferred embodiments thereof, the invention comprises, in each of the areas axially opposite with respect to the forming support, a respective transfer device configured to be selectively coupled with said annular support element and axially movable with respect to said forming support.

Preferably, said annular support element comprises a coupling portion for coupling with said transfer device.

Preferably, said transfer device comprises a plurality of second angular sectors circumferentially adjacent to one another and radially movable in a synchronous manner.

More preferably, each of said second angular sectors is configured to be selectively coupled with a respective angular sector of said first angular sectors.

In a particularly preferred embodiment thereof, said transfer device is slidably associated with a track extending along a direction parallel to the rotation axis of said forming support.

Preferably, said track is aerial.

Preferably, said transfer device comprises:
- an annular flange arranged coaxially to the rotation axis of said forming support and slidably associated with said track;
- an annular fastening/unfastening device arranged coaxially to said rotation axis and configured to be selectively coupled with said annular support element;
in which said annular fastening/unfastening device is defined in said plurality of second angular sectors.

Preferably, each of said second angular sectors is slidably associated with a radial expansion and contraction guide formed on said annular flange.

More preferably, each of said second angular sectors comprises:
- an annular plate arranged substantially perpendicular to the rotation axis of said forming support;
- at least one annular support element for supporting a respective angular sector of said first angular sectors.

Preferably, at least one of said second angular sectors comprises:
- a lever pivoted in said annular plate;
- an actuator configured to move said lever between a first operative position in which it is fastened to the annular support element and a second operative position in which it is unfastened from the annular support element.

Further characteristics and advantages of the present invention will become clearer from the following detailed description of preferred embodiments thereof, made with reference to the attached drawings. In such drawings:
- figure 1 is a schematic side and partially sectioned view of a portion of an apparatus for producing a tyre in accordance with the present invention, in a first operative configuration thereof;
- figure 2 is a schematic front view of an annular support element used in the apparatus of figure 1, in three different work positions thereof;

- figure 3 is a schematic and partially sectioned view of a portion of the apparatus of figure 1 in the aforementioned first operative configuration;
- figures 4a and 4b are perspective views that illustrate the portion of apparatus of figure 3 in two different operative positions;
- figure 5 is a schematic and partially sectioned view of the portion of apparatus of figure 3 in a different operative configuration thereof;
- figure 6 is a schematic and partially sectioned view of the portion of apparatus of figure 3 in a further operative configuration thereof;
- figure 7 is a schematic and partially sectioned view of the portion of apparatus of figure 3 in a further operative configuration thereof;
- figure 8 is a schematic and partially sectioned view of the portion of apparatus of figure 3 in a further operative configuration thereof.

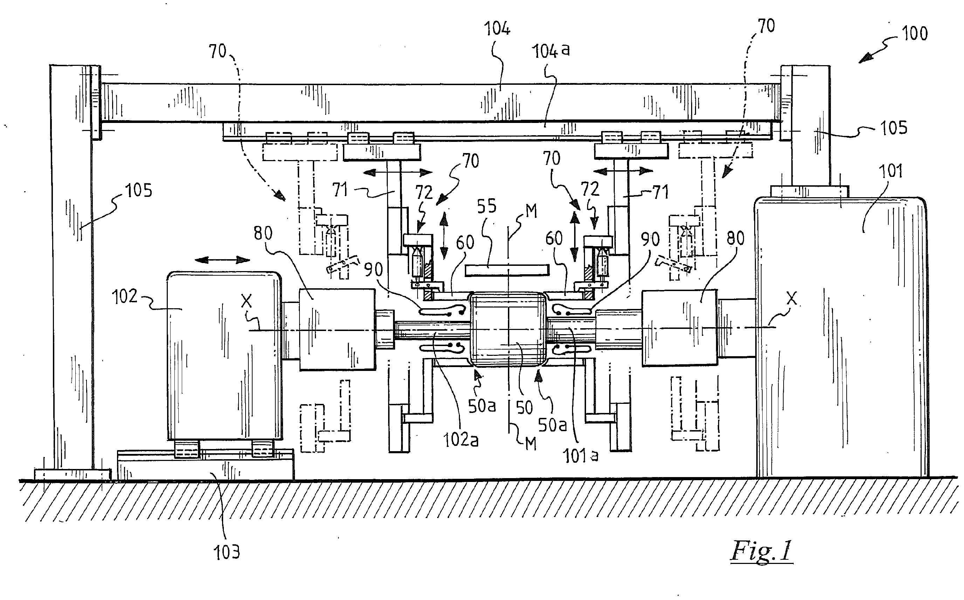

In figure 1, reference numeral 100 wholly indicates a portion of an exemplary embodiment of an apparatus for producing tyres for vehicle wheels in accordance with the present invention.

The apparatus 100 can be used in a process for producing tyres for vehicles, preferably four-wheeled heavy load vehicles (like trucks, lorries, buses, trailers) or light load vehicles (like auto vehicles, light trucks). However, it is possible to use the apparatus 100 also in processes for producing tyres for two-wheeled vehicles, in particular motorcycles.

Specifically, the apparatus 100 is used for building a carcass structure of the tyre.

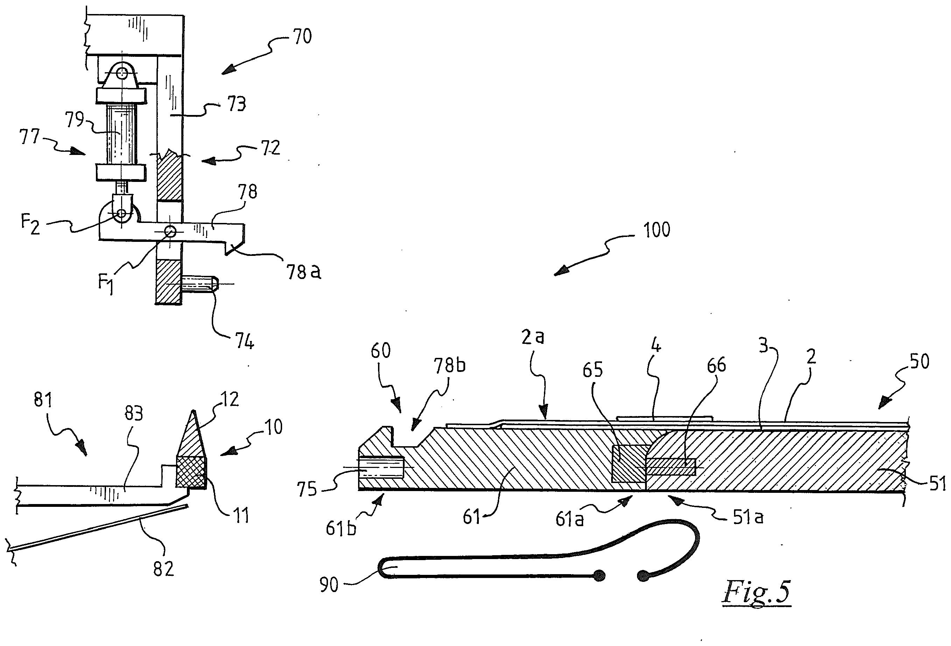

With reference to figures 5-8, the carcass structure comprises at least one carcass ply 2 including reinforcing cords embedded in a matrix of elastomeric material. Each carcass ply 2 has axial end edges 2a turned up around respective annular anchoring structures 10 configured to allow the tyre to be mounted and held in/on the rim of the wheel.

Each annular anchoring structure 10 is formed of a substantially circumferential annular insert 11 (or bead core) on which at least one filling insert 12 is applied in a radially outer position thereof.

Preferably, a semi-finished product 3 comprising for example the so-called liner, under-liner and anti-abrasive element (and generally called "complex") is provided in a radially inner position with respect to the carcass ply 2. Alternatively, the aforementioned liner, under-liner and anti-abrasive element can consist of layers that are distinct from one another.

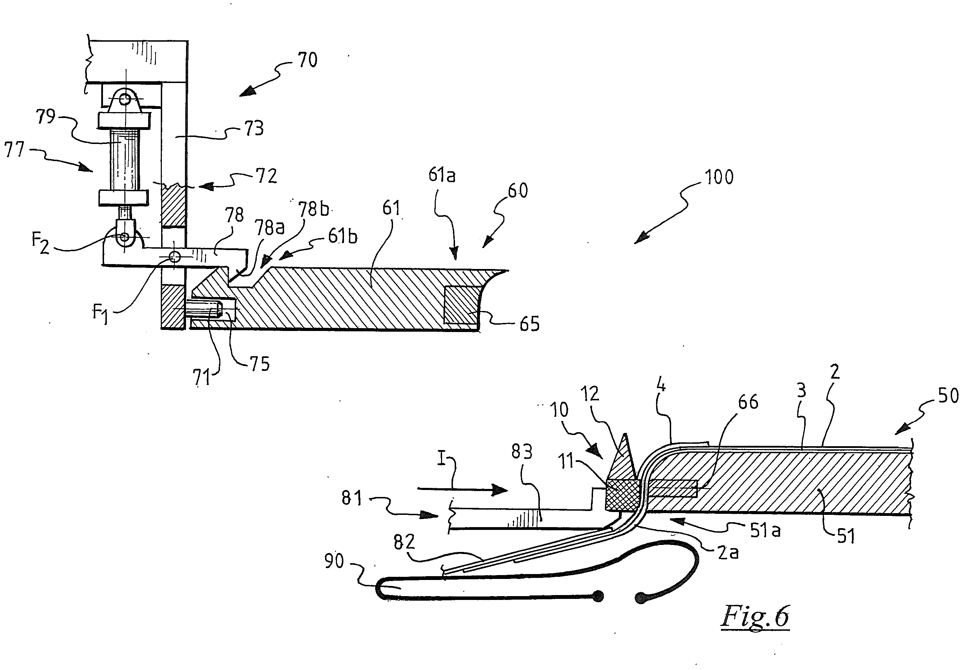

Preferably, one or more reinforcing structures 4 are arranged in a radially outer position with respect to the carcass ply 2 at the axial end edges 2a thereof. Each reinforcing structure 4 is preferably arranged in an axially inner position with respect to the filling insert 12 of the annular anchoring structure 10 (figures 6-8).

With reference to figure 1, the apparatus 100 comprises a forming support 50 having, preferably, a substantially cylindrical shape.

The forming support 50 is configured to rotate around a rotation axis X-X and is supported by a first drive shaft 101a associated with a mandrel group 101 and, on the axially opposite side, by a second driven shaft 102a associated with a tailstock group 102.

The mandrel group 101 is stably associated with the ground, whereas the tailstock group 102 is slidably mounted on an axial sliding guide 103 which is stably associated with the ground. The axial movement of the tailstock group 102 allows the axial withdrawal of the driven shaft 102a from the forming support 50, which in that case remains supported by just the drive shaft 101a. It is thus possible to axially withdraw the carcass structure from the forming support 50 and, if necessary, the forming support 50 from the drive shaft 101a, to proceed with the subsequent building operations of the tyre.

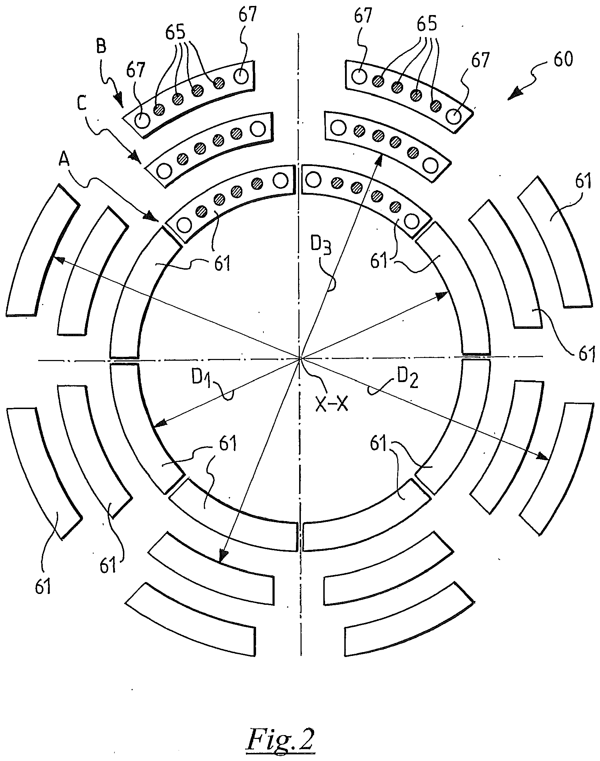

As shown in figure 1, as far as the present invention is concerned, the apparatus 100 is, apart from the mandrel group 101, the tailstock group 102 and the sliding guide 103, symmetrical with respect to a middle plane M of the forming support 50. For the sake of simplicity of explanation, the present invention will therefore be described and shown in figures 2 to 8 with reference to just one of the sides of the apparatus 100 with respect to the middle plane M (in figure 1, the left side of the middle plane M). What has been described and shown is nevertheless also valid with reference to the other side of the apparatus 100 (in figure 1, the right side of the middle plane M).

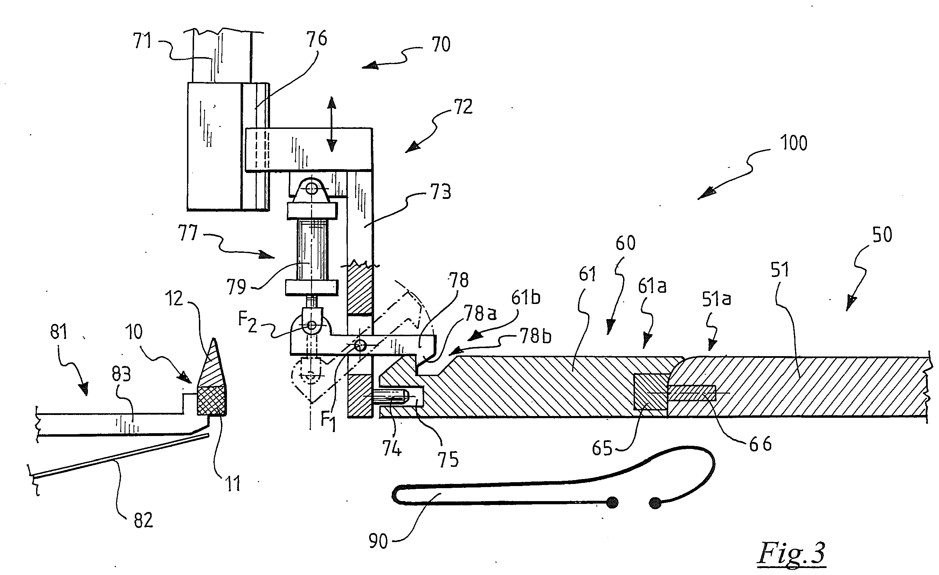

The forming support 50 preferably comprises a plurality of angular sectors (one of them, indicated with 51, is shown in figures 3, 4a, 4b and 5-8) circumferentially adjacent to one another and radially movable in a synchronous manner so as to give the forming support 50 the capability of expanding and contracting radially.

Again with reference to figure 1, the apparatus 100 comprises a deposition device 55 for depositing the carcass ply/plies 2 on the forming support 50. In particular, through the device 55 at least one carcass ply (not shown) that has previously been cut to size is deposited on the forming support 50. In the case of building tyres having many plies, the operation is repeated in succession many times. The ply/plies is/are then joined on the forming support 50. In the specific exemplary embodiment shown herein, before depositing the aforementioned ply/plies the aforementioned semi-finished product 3 or, alternatively, the various layers defining the liner, the under-liner and the anti-abrasive element are deposited on the forming support 50.

Once deposited on the forming support 50, each of the aforementioned plies has the opposite axial end edges 2a projecting axially from the forming support 50.

The apparatus 100 comprises, in each of the areas axially opposite with respect to the forming support 50, an annular support element 60 for supporting a respective axial end edge 2a of each carcass ply 2 (figures 1 and 5).

As described later on, each annular support element 60 is axially movable with respect to the forming support 50 between a first operative position in which the annular support element 60 is axially adjacent to a respective axial end portion 50a of the forming support 50 (figure 1, 3 and 5) and a second operative position in which the annular support element 60 is axially distant from the forming support 50 (figures 6-8).

Each annular support element 60 is also radially expandable/contractible so as to be set, in said first operative position, at a first diameter equal to that of the forming support 50 and, in said second operative position, at a diameter that is greater than the aforementioned first diameter.

In this way, when the annular support element 60 is in its first operative position it can support the respective axial end edge 2a of the carcass ply 2, which in the contrary case would project canti-levered from the forming support 50, whereas when the annular support element 60 is in its second operative position it does not hinder the subsequent building operations of the tyre (such a second operative position hereafter is also identified as "outside working area" position).

The apparatus 100 further comprises, in each of the areas axially opposite with respect to the forming support 50, a respective transfer device 70 configured to be selectively coupled with a respective annular support element 60.

Each transfer device 70 is slidably mounted on an aerial track 104a associated with a cross member 104 supported by two uprights 105. The axial movement of the annular support elements 60 towards, and away from, the forming support 50 is thus carried out through the sliding of the respective transfer devices 70 on the aerial track 104a of the cross member 105.

Of course, the axial movement of the transfer devices 70 can be obtained through solutions which are different than the one described above, for example through sliding on tracks associated with the ground. The use of an aerial track 104a is, however, preferred precisely because it does not take up space on the ground.

As described more clearly later on, the transfer device 70, in addition to carry out the axial movement of the respective annular support element 60, also carries out the radial expansion/contraction of such an annular support element 60.

The apparatus 100 further comprises, in each of the areas axially opposite with respect to the forming support 50, a respective service group 80.

Each service group 80 comprises a support device 81 for supporting the annular anchoring structure 10. The support device 81 is axially movable with respect to the forming support 50 and comprises, in turn, a device 82 for pulling down the end edge 2a of the carcass ply 2 (and possibly of the semi-finished product 3 and of the reinforcing structure 4) and a device 83 for positioning the annular anchoring structure 10 on the end edge 2a of the carcass ply 2 deposited on the forming support 50.

The axial movement of the support device 81 towards the forming support 50 is indicated with the arrow I in figure 6. It should be noted how through such a movement the end edge 2a of the carcass ply 2 is pulled down by the pulling-down device 82 and the annular anchoring structure 10 is brought by the positioning device 83 into contact with such an end edge 2a at a shoulder of the forming support 50.

Again with reference to figure 1, the apparatus 100 further comprises, in each of the areas axially opposite with respect to the forming support 50, a respective air chamber 90.

Each air chamber 90 is located in a radially inner position with respect to the annular support element 60 when the annular support element 60 is in its first operative position (figures 1, 3 and 5). Each air chamber 90 is also arranged in a radially inner position with respect to the support device 81 of the annular anchoring structure 10 when such a support device 81 is in a position axially adjacent to the forming support 50 (figure 6).

With reference to figure 2, each annular support element 60 comprises a plurality of angular sectors 61 (eight sectors in the specific embodiment shown in figure 2) circumferentially adjacent to one another and radially movable in a synchronous manner, so as to provide the annular support element 60 with the capability of expanding and contracting radially. For the sake of simplicity of illustration, reference numeral 61 is associated with just some of the angular sectors herein shown.

Figure 2 shows the annular support element 60 in three different radial positions thereof: a first radially contracted position (indicated with A and at which the annular support element 60 has a diameter D1), in which the angular sectors 61 are adjacent to one another in the circumferential direction; a second radially expanded position (indicated with B and at which the annular support element 60 has a diameter D2 that is greater than D1), in which the angular sectors 61 are moved apart from each other in the circumferential direction; a third radial position (indicated with C and at which the annular support element 60 has a diameter D3 comprised between D1 and D2) in which the angular sectors 61 are in an intermediate radial position between the operative positions A and B.

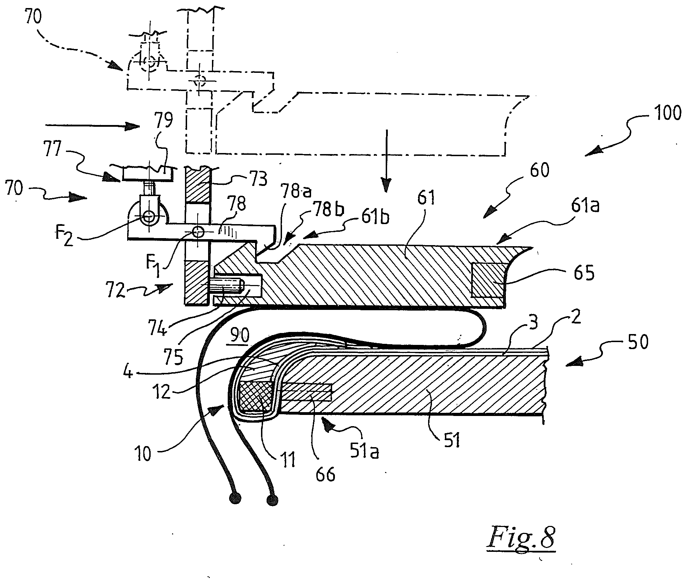

In particular, the annular support element 60 takes up the radial position A when it is in its first operative position (axially adjacent to the forming support 50), the radial position B when it is in its second operative position (axially distant from the forming support 50) and the radial position C when it is in its third operative position, illustrated in figure 8. In this last operative position, the annular support element 60 is in a radially outer position with respect to a respective axial end portion 51a of the angular sectors 51 and presses the air chamber 90 against the forming support 50, as described more clearly later on.

The number of angular sectors 61 is preferably equal to that of the angular sectors 51, so that each angular sector 61 can be arranged in a position axially adjacent to a respective angular sector 51, as shown in figures 3, 4a, 4b and 5-8.

Preferably, the number of angular sectors 61 is greater than two, more preferably greater than or equal to four, even more preferably greater than or equal to six, even more preferably equal to eight (as shown in figure 2). The Applicant indeed believes that the greater the number of angular sectors 61 the greater, being equal the radial displacement, the surface continuity that can be ensured in the circumferential direction in the radial positions B and C, or vice-versa, being equal the surface continuity, the diameter that can be reached in the radial positions B and C. As will be clearer in the rest of the present description, this is extremely advantageous since it is highly desirable for the annular support element 60 to have a sufficiently large diameter in the radial position B as not to be a hindrance to the axial movement of the support device 81 of the annular anchoring structure 10, as well as it is highly desirable for the annular support element 60 to have a sufficiently high surface continuity in the circumferential direction, in the radial position C, to carry out a thrusting action that is as uniform as possible on the air chamber 90.

When the annular support element 60 is in its first operative position each angular sector 61 is fixedly coupled with a respective angular sector 51 so that the annular support element 60 can be supported by the forming support 50 and rotate as a unit with it.

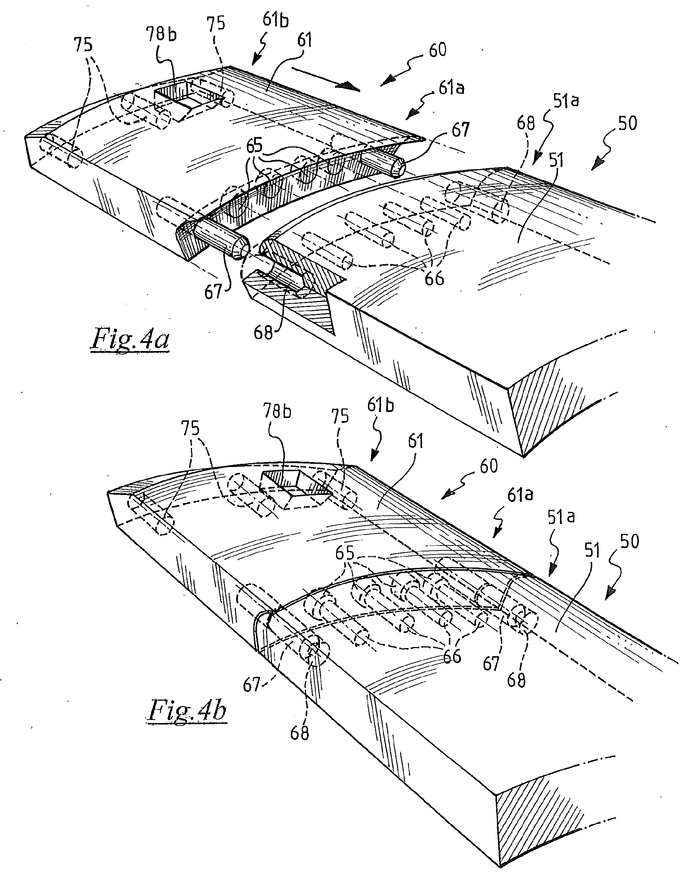

In the specific example herein illustrated, the coupling between annular support element 60 and forming support 50 takes place by means of a magnetic device (figures 2-8) and, in particular, by providing for example at least one magnet 65 in an axial end portion 61a of each angular sector 61 and at least one corresponding magnet 66 in an axial end portion 51a of each angular sector 51. In particular, as shown in figures 4a, 4b, four permanent magnets 65 distributed circumferentially in each angular sector 61 and four corresponding permanent magnets 66 distributed circumferentially in each angular sector 51 are preferably provided.

The permanent magnets 65 and 66 are positioned substantially flush with the axial end faces of the respective angular sectors 61, 51 so as to be able to exert an effective mutual magnetic attraction force as soon as the axial distance between angular sector 61 and angular sector 51 becomes less than a predetermined threshold value.

The type of coupling device and the type and/or number of permanent magnets which are used can be different from what is herein illustrated.

The apparatus 100 also comprises a centring device for centring the annular support element 60 with the forming support 50.

As shown in figures 2, 4a and 4b, such a centring device comprises two pins 67 extending canti-levered from the axial end face of each angular sector 61 and configured to be housed in respective calibrated holes 68 formed on the axial end face of each angular sector 51. The pins 67 are arranged in each angular sector 61 on circumferentially opposite sides with respect to the permanent magnets 65. Correspondingly, the calibrated holes 68 are arranged in each angular sector 51 on circumferentially opposite sides with respect to the permanent magnets 66.

The type of centring device and/or the type and number of pins which are used can be different from what is herein illustrated.

For the sake of simplicity, in figure 2 the permanent magnets 65 and the pins 67 have only been illustrated at some of the angular sectors 61 and reference numerals 65 and 67 have been associated with just some of the illustrated permanent magnets.

With reference to figures 3, 4a, 4b, 5-8, each angular sector 61 is coupled with the transfer device 70 at an axial end portion 61b thereof opposite the axial end portion 61a.

As shown in figure 1, in the specific example herein illustrated the transfer device 70 comprises an annular flange 71 which is coaxial to the rotation axis X-X and slidably associated with the track 104a.

The flange 71 has a plurality of angular sectors 72 associated with it that are circumferentially adjacent to one another and radially movable in a synchronous manner, so as to provide the transfer device 70 with the capability of expanding and contracting radially. Just one of such angular sectors 72 is shown in figures 3, 4a, 4b and 5-8.

The number of angular sectors 72 is equal to that of the angular sectors 61, so that each angular sector 72 can be arranged in a position axially adjacent to a respective angular sector 61, as shown in figures 3, 6-8.

With specific reference to figures 3, 5-8, each angular sector 72 comprises an annular plate 73 having, at a radially inner portion thereof, at least one pin 74 extending axially canti-levered and configured to be housed in un respective calibrated hole 75 formed on the face of the axial end portion 61b of the respective angular sector 61.

Three pins 74 are preferably provided on each annular plate 73 and three respective calibrated holes 75 (illustrated in figure 4a, 4b) are preferably provided on each angular sector 61. Through the coupling between pins 74 and calibrated holes 75 the transfer device 70 supports each angular sector 61 of the annular support element 60 when the latter is in the aforementioned second and third operative positions.

With particular reference to figure 3, the annular plate 73 can slide on a radial guide 76 formed on the annular flange 71. Through the sliding of the annular plate 73 on the radial guide 76 the radial movement of each angular sector 61 and, thus, the desired radial expansion/contraction of the annular support element 60 is obtained.

Each angular sector 72 can be selectively coupled with the respective angular sector 61 so as to pick the angular sector 61 up and release the angular sector 61 as needed. In this respect, each angular sector 72 comprises a fastening/unfastening device 77 for fastening/unfastening the respective angular sector 61.

In particular, each annular fastening/unfastening device 77 comprises a lever 78 pivoted to the annular plate 73. Such pivoting takes place at an axis F₁ defined in an intermediate portion of the lever 78. The lever 78 is also pivoted to a suitable actuator 79 (in the illustrated example, a pneumatic cylinder) associated with the angular sector 72. Such pivoting takes place at an axis F₂ defined in an end portion of the lever 78.

At an end portion thereof opposite the one in which the axis F₂ is defined, the lever 78 comprises a radial projecting portion 78a intended to engage a respective recess 78b formed on the radially outer surface of the axial end portion 61b of the respective angular sector 61.

As shown in figure 3, upon command of the actuator 79 (i.e., in the illustrated example, following the linear sliding of the piston of the pneumatic cylinder), the lever 78 rotates around the axis F₁ moving from a fastened position of the angular sector 61 (shown in figure 3 with a solid line), in which the radial projecting portion 78a of the lever 78 engages the recess 78b of the angular sector 61, and an unfastened position of the angular sector 61 (shown in figure 3 with a broken line), in which the radial projecting portion 78a of the lever 78 disengages the recess 78b of the angular sector 61.

In the fastened position, the angular sector 61, which is radially supported by the angular sector 72 of the transfer device 70 through the coupling of the pins 74 in the respective calibrated holes 75, is axially locked with respect to the angular sector 72, so that an axial and/or radial movement of the angular sector 72 corresponds to an identical axial and/or radial movement of the angular sector 61. In the unfastened position, the angular sector 61, which is again radially supported by the angular sector 72 through the coupling of the pins 74 in the respective calibrated holes 75, is axially releasable from the angular sector 72 following the axial movement of the latter away from the forming support 50.

A preferred embodiment of a process for producing a tyre in accordance with the present invention will now be described. This process can be carried out by the apparatus 100 described above.

Such a process initially comprises building the carcass structure of the tyre on the forming support 50. For the sake of simplicity, reference will be made to the operations that take place at just one of the sides of the apparatus 100 with respect to the middle plane M, being understood that the operations described also take place simultaneously at the other side of the apparatus 100.

Building the carcass structure initially comprises arranging the forming support 50 depending on the tyre to be built and positioning the annular support element 60 in its first operative position. In such an operative position the annular support element 60 is axially coupled with the respective axial end portion 50a of the forming support 50 and is adjusted to a diameter D1 (radial position A in figure 2) equal to that of the forming support 50, as shown in figures 1, 3.

More specifically, in the aforementioned first operative position each angular sector 61 of the annular reinforcing element 60 is axially aligned and coupled with a respective angular sector 51 of the forming support 50.

Figure 4a shows the angular sectors 51 and 61 in a reciprocal position prior to that of mutual coupling, which on the other hand is shown in figures 4b and 5. The mutual coupling between annular support element 60 and forming support 50 takes place through the coupling between pins 67 and calibrated holes 68 and the mutual magnetic attraction force exerted by the magnets 65 and 66.

In order to bring the annular support element 60 into its first operative position the transfer device 70 described above is used. In particular, each angular sector 72 of the transfer device 70 is at first coupled with a respective angular sector 61 of the annular support element 60 by engaging the projecting portion 78a of the lever 78 in the recess 78b of the angular sector 61 and the pins 74 in the respective calibrated holes 75, as shown in figures 3 and 4b. Thereafter, the transfer device 70 is translated on the track 104a until the desired axial position is reached.

During or after such an axial movement the annular support element 60 is set at the desired radial position. Such setting is obtained through the radial movement of each angular sector 72 with respect to the annular flange 71 of the transfer device 70.

Then the semi-finished product 3 (or each of the layers defining the liner, the under-liner and the anti-abrasive element, respectively), the carcass ply/plies 2 and the reinforcing structure 4 are deposited on the forming support 50 and on the annular support elements 60, thus reaching the operative configuration shown in figure 5.

During such a deposition operation, the forming support 50 and the annular support elements 60 rotate as a unit around the rotation axis X-X. The annular support element 60 provides the desired support to a respective axial end edge 2a of the carcass ply 2 and to a respective axial end edge of the semi-finished product 3, as well as to a respective axial end edge of a respective reinforcing structure 4.

Before carrying out the deposition operations discussed above, the transfer device 70 is decoupled from the annular support element 60 and brought to a position which is axially distal from the support element 60. This is obtained by disengaging the projecting portion 78a of the lever 78 from the recess 78b and translating the transfer device 70 on the track 104a away from the forming support 50.

At the end of the aforementioned deposition operations, the annular support element 60 (and therefore each of the angular sectors 61 forming the annular support element 60) is picked up by the respective transfer device 70 (and therefore by the respective angular sector 72) and brought to its second operative position. As shown in figure 6, in such an operative position each angular sector 61 of the annular support element 60 is supported by the respective angular sector 72 of the transfer device 70 in a position axially distal from the forming support 50. The annular support element 60 is also expanded radially until a diameter D2 (radial position B in figure 2) that is greater than the diameter D1 is reached. In such an operative position the annular support element 60 is in the operative configuration indicated above as "outside working area".

Again with reference to figure 6, at this point it is possible to proceed with the positioning of the annular anchoring structure on the axial end edge 2a of the carcass ply 2. This takes place through the movement of the support device 81 towards the forming support 50. Such movement firstly causes the end edge 2a of the carcass ply 2 to be pulled down through the pulling-down device 82 and then the annular anchoring structure 10 to be positioned on the end edge 2a of the carcass ply 2, in particular at the shoulder of the forming support 50, through the positioning device 83.

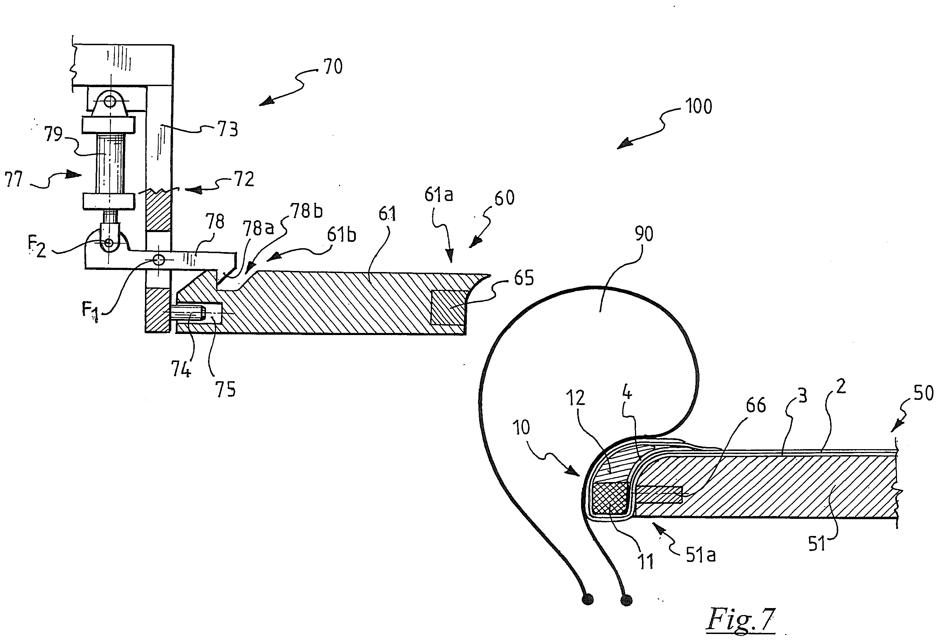

Thereafter, the support device 81 is moved away from the forming support and, as shown in figure 7, the air chamber 90 is inflated. The inflation of the air chamber 90 causes the turning up of the axial end edge 2a of the carcass ply 2 around the annular anchoring structure 10 and the simultaneous pulling down of the filling insert 12 of the annular anchoring structure 10 over the carcass ply 2.

After having been inflated, the air chamber 90 is pressed against the forming support 50. Such an operation is advantageously carried out by the annular support element 60, which is firstly moved axially by the transfer device 70 until it is positioned in a radially outer position with respect to the axial end portion 50a of the forming support 50 and, thereafter, radially contracted until it reaches a diameter D3 (radial position C in figure 2) that is greater than D1 and smaller than D2. In this way, the turned up axial end edge of the carcass ply 2 is compacted around the annular anchoring structure 10 and the bead thus formed is consolidated.

Once the building of the carcass structure on the forming support 50 is completed, the carcass structure is arranged in a radially inner position with respect to a crown structure comprising at least one belt layer and, in a radially outer position with respect to the at least one belt layer, a tread band. The carcass structure is then associated with the crown structure and toroidally shaped together with the crown structure, for example in a suitable shaping drum.

Of course, a man skilled in the art can make further modifications and variants to the invention described above in order to satisfy specific and contingent application requirements, said variants and modifications in any case being within the scope of protection as defined by the following claims.

## Claims

1. Process for producing tyres for vehicle wheels, comprising building a carcass structure on a forming support (50) having a rotation axis (X-X), wherein building a carcass structure comprises in sequence:
- arranging a pair of annular support elements (60) in a first operative position, wherein each annular support element (60) is axially adjacent to a respective axial end portion (50a) of said forming support (50) and has a predetermined first diameter (D1) to form a support surface for a respective axial end edge (2a) of at least one carcass ply (2);
- depositing said at least one carcass ply (2) on said forming support (50) and said pair of annular support elements (60);
- bringing said pair of annular support elements (60) into a second operative position in which each annular support element (60) is axially distant from said forming support (50) and has a second diameter (D2) that is greater than said first diameter (D1);
- associating a respective annular anchoring structure (10) with each of said opposite axial end edges (2a).

2. Process according to claim 1, wherein arranging said pair of annular support elements (60) in said first operative position comprises coupling each of said annular support elements (60) with said forming support (50) so that said annular support element (60) can rotate in synchrony with said forming support (60).

3. Process according to claim 1 or 2, comprising, after having associated the respective annular anchoring structure (10) with each of said axial end edges (2a) and while said pair of annular support elements (60) is in said second operative position, turning up each of said axial end edges (2a) around the respective annular anchoring structure (10) through inflation of a respective air chamber (90).

4. Process according to claim 3, comprising, after the inflation of said air chamber (90), pressing said air chamber (90) against said forming support (50) by a respective annular support element (60) of said pair of annular support elements (60).

5. Process according to any one of the previous claims, comprising, when said annular support element (60) is in said first operative position, coupling a first axial end face of said annular support element (60) with a respective axial end face of said forming support (50).

6. Process according to any one of the previous claims, wherein arranging said pair of annular support elements (60) in said first operative position comprises coupling each annular support element (60) with a respective transfer device (70) and moving said transfer device (70) towards said forming support (50) until said annular support element (60) reaches said first operative position.

7. Process according to claim 6, wherein bringing said pair of annular support elements (60) into said second operative position comprises coupling each annular support element (60) with the respective transfer device (70) and moving said transfer device (70) away from said forming support (50) until said annular support element (60) reaches said second operative position.

8. Apparatus (100) for producing tyres for vehicle wheels, comprising:
- a forming support (50) having a rotation axis (X-X);
- a deposition device (55) for depositing at least one carcass ply (2) on said forming support (50);
the apparatus (100) further comprising, in each of the areas axially opposite with respect to the forming support (50) :
- a device (81) for positioning an annular anchoring structure (10) on a respective axial end edge (2a) of said at least one carcass ply (2);
- an annular support element (60) axially movable with respect to said forming support (50) between a first operative position in which said annular support element (60) is axially adjacent to the forming support (50) and a second operative position in which said annular support element (60) is axially distant from the forming support (50) ;
wherein said annular support element (60) is radially expandable and contractible in order to be adjusted to a predetermined first diameter (D1) when it is in said first operative position and to a second diameter (D2) that is greater than said first diameter (D1) when it is in said second operative position.

9. Apparatus (100) according to claim 8, wherein when said annular support element (60) is in said first operative position it is coupled with said forming support (50) and it can rotate in synchrony with said forming support (50).

10. Apparatus (100) according to claim 8 or 9, wherein said annular support element (60) is axially movable from said second operative position to a third operative position in which it is in a radially outer position with respect to a respective axial end portion (50a) of said forming support (50).

11. Apparatus (100) according to claim 10, wherein when said annular support element (60) is in said third operative position it has a third diameter (D3) that is smaller than said second diameter (D2) and greater than said first diameter (D1).

12. Apparatus (100) according to any one of claims 8 to 11, comprising, in each of said areas axially opposite with respect to said forming support (50), a respective inflatable air chamber (90).

13. Apparatus (100) according to claim 12, wherein said air chamber (90) is arranged in a radially inner position with respect to said annular support element (60) when said annular support element (60) is in said first operative position.

14. Apparatus (100) according to any one of claims 8 to 13, wherein said annular support element (60) comprises a plurality of first angular sectors (61) circumferentially adjacent to one another and radially movable in a synchronous manner.

15. Apparatus (100) according to any one of claims 8 to 14, comprising, in each of the areas axially opposite with respect to the forming support (50), a respective transfer device (70) configured to be selectively coupled with said annular support element (60) and axially movable with respect to said forming support (50).

## Patentansprüche

1. Verfahren zur Herstellung von Reifen für Fahrzeugräder, umfassend das Fertigen einer Karkassenstruktur auf einem Formungsträger (50) mit einer Drehachse (X-X), wobei das Fertigen einer Karkassenstruktur der Reihenfolge nach Folgendes umfasst:
- Anordnen eines Paars von ringförmigen Trägerelementen (60) in einer ersten Betriebsstellung, wobei jedes ringförmige Trägerelement (60) axial zu einem jeweiligen axialen Endabschnitt (50a) des Formungsträgers (50) benachbart ist und einen vorbestimmten ersten Durchmesser (D1) aufweist, um eine Tragfläche für eine jeweilige axiale Endkante (2a) zumindest einer Karkassenlage (2) zu bilden;
- Ablegen der zumindest einen Karkassenlage (2) an dem Formungsträger (50) und dem Paar von ringförmigen Trägerelementen (60);
- Bringen des Paars von ringförmigen Trägerelementen (60) in eine zweite Betriebsstellung, in der jedes ringförmige Trägerelement (60) von dem Formungsträger (50) beabstandet ist und einen zweiten Durchmesser (D2) aufweist, der größer ist als der Durchmesser (D1);
- Zuordnen einer jeweiligen ringförmigen Verankerungsstruktur (10) an jede der gegenüberliegenden axialen Endkanten (2a).

2. Verfahren nach Anspruch 1, wobei das Anordnen des Paars von ringförmigen Trägerelementen (60) in der ersten Betriebsstellung das Koppeln jedes der ringförmigen Trägerelemente (60) mit dem Formungsträger (50) umfasst, so dass das ringförmige Trägerelement (60) sich synchron mit dem Formungsträger (60) drehen kann.

3. Verfahren nach Anspruch 1 oder 2, umfassend das Hochdrehen jede der axialen Endkanten (2a) um die jeweilige ringförmige Verankerungsstruktur (10) durch Aufblasen einer jeweiligen Luftkammer (90), nachdem die jeweilige ringförmige Verankerungsstruktur (10) an jede der axialen Endkanten (2a) zugeordnet wurde, und während sich das Paar von ringförmigen Trägerelementen (60) in der zweiten Betriebsstellung befindet.

4. Verfahren nach Anspruch 3, umfassend, nach dem Aufblasen der Luftkammer (90), das Drücken der Luftkammer (90) gegen den Formungsträger (50) durch ein jeweiliges ringförmiges Trägerelement (60) des Paars von ringförmigen Trägerelementen (60).

5. Verfahren nach einem der vorhergehenden Ansprüche, umfassend, wenn sich das ringförmige Trägerelement (60) in der ersten Betriebsstellung befindet, das Koppeln einer ersten axialen Endfläche des ringförmigen Trägerelements (60) mit einer jeweiligen axialen Endfläche des Formungsträgers (50).

6. Verfahren nach einem der vorhergehenden Ansprüche, wobei das Anordnen des Paars von ringförmigen Trägerelementen (60) in der ersten Betriebsstellung das Koppeln eines jeden ringförmigen Trägerelements (60) mit einer jeweiligen Transfereinrichtung (70) und das Bewegen der Transfereinrichtung (70) zu dem Formungsträger (50) hin umfasst, bis das ringförmige Trägerelement (60) die erste Betriebsstellung erreicht.

7. Verfahren nach einem der vorhergehenden Ansprüche, wobei das Bringen des Paars von ringförmigen Trägerelementen (6) in die zweite Betriebsstellung das Koppeln eines jeden ringförmigen Trägerelements (60) mit der jeweiligen Transfereinrichtung (60) und das Bewegen der Transfereinrichtung (70) von dem Formungsträger (50) weg umfasst, bis das ringförmige Trägerelement (60) die erste Betriebsstellung erreicht.

8. Vorrichtung (100) zur Herstellung von Reifen für Fahrzeugräder, wobei die Vorrichtung umfasst:
- einen Formungsträger (50) mit einer Drehachse (X-X);
- eine Ablegeeinrichtung (55) zum Ablegen zumindest einer Karkassenlage (2) an dem Formungsträger (50);
wobei die Vorrichtung (100) des Weiteren in jedem der in Bezug auf den Formungsträger (50) axial entgegengesetzten Bereiche umfasst:
- eine Einrichtung (81) zum Positionieren einer ringförmigen Verankerungsstruktur (10) an einer jeweiligen axialen Endkante (2a) der zumindest einen Karkassenlage (2);
- ein ringförmiges Trägerelement (60), das axial relativ zu dem Formungsträger (50) beweglich ist zwischen einer ersten Betriebsstellung, in der das ringförmige Trägerelement (60) axial zu dem Formungsträger (50) benachbart ist, und einer zweiten Betriebsstellung, in der das ringförmige Trägerelement (60) axial von dem Formungsträger (50) beabstandet ist;
wobei das ringförmige Trägerelement (60) radial ausdehnbar und kontrahierbar ist, um an einen vorbestimmten ersten Durchmesser (D1) angepasst zu werden, wenn es in der ersten Betriebsstellung ist, und einen zweiten Durchmesser (D2), der größer ist als der erste Durchmesser (D1), wenn es in der zweiten Betriebsstellung ist.

9. Vorrichtung (100) nach Anspruch 8, wobei, das ringförmige Trägerelement (60), wenn es in der ersten Betriebsstellung ist, mit dem Formungsträger (50) gekoppelt ist und sich synchron mit dem Formungsträger (50) drehen kann.

10. Vorrichtung (100) nach Anspruch 8 oder 9, wobei das ringförmige Trägerelement (60) axial aus der zweiten Betriebsstellung in eine dritte Betriebsstellung beweglich ist, in der es sich in einer radial äußeren Position in Bezug auf einen jeweiligen axialen Endabschnitt (50a) des Formungsträgers (50) befindet.

11. Vorrichtung (100) nach Anspruch 10, wobei das ringförmige Trägerelement (60), wenn es in der dritten Betriebsstellung ist, einen dritten Durchmesser (D3) aufweist, der kleiner ist als der zweite Durchmesser (D2) und größer als der erste Durchmesser (D1).

12. Vorrichtung (100) nach einem der Ansprüche 8 bis 11, wobei sie in jedem der in Bezug auf den Formungsträger (50) axial entgegengesetzten Bereiche eine jeweilige aufblasbare Luftkammer (90) umfasst.

13. Vorrichtung (100) nach Anspruch 12, wobei die Luftkammer (90) in einer radial inneren Position in Bezug auf das ringförmige Trägerelement (60) angeordnet ist, wenn das ringförmige Trägerelement (60) in der ersten Betriebsstellung ist.

14. Vorrichtung (100) nach einem der Ansprüche 8 bis 13, wobei das ringförmige Trägerelement (60) eine Vielzahl von ersten Winkelsektoren (61) umfasst, die in Umfangsrichtung zueinander benachbart und radial auf synchrone Weise beweglich sind.

15. Vorrichtung (100) nach einem der Ansprüche 8 bis 14, wobei sie in jedem der in Bezug auf den Formungsträger (50) axial entgegengesetzten Bereiche eine jeweilige Transfereinrichtung (70) umfasst, die dazu ausgestaltet ist, selektiv mit dem ringförmigen Trägerelement (60) gekoppelt zu werden, und axial in Bezug auf den Formungsträger (50) beweglich ist.

## Revendications

1. Procédé de production de pneus pour roues de véhicule, comprenant la construction d'une structure de carcasse sur un support de formation (50) ayant un axe de rotation (X-X), où la construction d'une structure de carcasse comprend, successivement, le fait :
- d'agencer une paire d'éléments de support annulaires (60) dans une première position fonctionnelle, où chaque élément de support annulaire (60) est axialement adjacent à une partie d'extrémité axiale respective (50a) dudit support de formation (50) et a un premier diamètre prédéterminé (D1) pour former une surface de support pour un bord d'extrémité axiale respectif (2a) d'au moins un pli de carcasse (2) ;
- de déposer ledit au moins un pli de carcasse (2) sur ledit support de formation (50) et ladite paire d'éléments de support annulaires (60) ;
- d'amener ladite paire d'éléments de support annulaires (60) dans une deuxième position fonctionnelle dans laquelle chaque élément de support annulaire (60) est axialement distant dudit support de formation (50) et a un deuxième diamètre (D2) qui est supérieur audit premier diamètre (D1) ;
- d'associer une structure d'ancrage annulaire respective (10) à chacun desdits bords d'extrémité axiale opposés (2a).

2. Procédé selon la revendication 1, dans lequel l'agencement de ladite paire d'éléments de support annulaires (60) dans ladite première position fonctionnelle comprend le couplage de chacun desdits éléments de support annulaires (60) audit support de formation (50) de sorte que ledit élément de support annulaire (60) puisse tourner de façon synchrone avec ledit support de formation (60).

3. Procédé selon la revendication 1 ou 2, comprenant, après avoir associé la structure d'ancrage annulaire respective (10) à chacun desdits bords d'extrémité axiale (2a) et tandis que ladite paire d'éléments de support annulaires (60) est dans ladite deuxième position fonctionnelle, le retournement de chacun desdits bords d'extrémité axiale (2a) autour de la structure d'ancrage annulaire respective (10) par gonflage d'une chambre à air respective (90).

4. Procédé selon la revendication 3, comprenant, après le gonflage de ladite chambre à air (90), le pressage de ladite chambre à air (90) contre ledit support de formation (50) par un élément de support annulaire respectif (60) de ladite paire d'éléments de support annulaires (60).

5. Procédé selon l'une quelconque des revendications précédentes, comprenant, lorsque ledit élément de support annulaire (60) est dans ladite première position fonctionnelle, le couplage d'une première face d'extrémité axiale dudit élément de support annulaire (60) à une face d'extrémité axiale respective dudit support de formation (50).

6. Procédé selon l'une quelconque des revendications précédentes, dans lequel l'agencement de ladite paire d'éléments de support annulaires (60) dans ladite première position fonctionnelle comprend le couplage de chaque élément de support annulaire (60) à un dispositif de transfert respectif (70) et le déplacement dudit dispositif de transfert (70) vers ledit support de formation (50) jusqu'à ce que ledit élément de support annulaire (60) atteigne ladite première position fonctionnelle.

7. Procédé selon la revendication 6, dans lequel le fait d'amener ladite paire d'éléments de support annulaires (60) dans ladite deuxième position fonctionnelle comprend le couplage de chaque élément de support annulaire (60) au dispositif de transfert respectif (70) et le déplacement dudit dispositif de transfert (70) loin dudit support de formation (50) jusqu'à ce que ledit élément de support annulaire (60) atteigne ladite deuxième position fonctionnelle.

8. Appareil (100) pour produire des pneus pour roues de véhicule, comprenant :
- un support de formation (50) ayant un axe de rotation (X-X) ;
- un dispositif de dépôt (55) pour déposer au moins un pli de carcasse (2) sur ledit support de formation (50) ;
l'appareil (100) comprenant en outre, dans chacune des zones axialement opposées par rapport au support de formation (50) :
- un dispositif (81) pour positionner une structure d'ancrage annulaire (10) sur un bord d'extrémité axiale respectif (2a) dudit au moins un pli de carcasse (2) ;
- un élément de support annulaire (60) axialement mobile par rapport audit support de formation (50) entre une première position fonctionnelle dans laquelle ledit élément de support annulaire (60) est axialement adjacent au support de formation (50) et une deuxième position fonctionnelle dans laquelle ledit élément de support annulaire (60) est axialement distant du support de formation (50) ; ;
où ledit élément de support annulaire (60) est radialement expansible et contractable afin d'être ajusté à un premier diamètre prédéterminé (D1) lorsqu'il est dans ladite première position fonctionnelle et à un deuxième diamètre (D2) qui est supérieur audit premier diamètre (D1) lorsqu'il est dans ladite deuxième position fonctionnelle.

9. Appareil (100) selon la revendication 8, dans lequel lorsque ledit élément de support annulaire (60) est dans ladite première position fonctionnelle, il est couplé audit support de formation (50) et il peut tourner de façon synchrone avec ledit support de formation (50).

10. Appareil (100) selon la revendication 8 ou 9, dans lequel ledit élément de support annulaire (60) est axialement mobile de ladite deuxième position fonctionnelle à une troisième position fonctionnelle dans laquelle il est dans une position radialement externe par rapport à une partie d'extrémité axiale respective (50a) dudit support de formation (50).

11. Appareil (100) selon la revendication 10, dans lequel lorsque ledit élément de support annulaire (60) est dans ladite troisième position fonctionnelle, il présente un troisième diamètre (D3) qui est inférieur audit deuxième diamètre (D2) et supérieur audit premier diamètre (D1).

12. Appareil (100) selon l'une quelconque des revendications 8 à 11, comprenant, dans chacune desdites zones axialement opposées par rapport audit support de formation (50), une chambre à air gonflable respective (90).

13. Appareil (100) selon la revendication 12, dans lequel ladite chambre à air (90) est agencée dans une position radialement interne par rapport audit élément de support annulaire (60) lorsque ledit élément de support annulaire (60) est dans ladite première position fonctionnelle.

14. Appareil (100) selon l'une quelconque des revendications 8 à 13, dans lequel ledit élément de support annulaire (60) comprend une pluralité de premiers secteurs angulaires (61) circonférentiellement adjacents les uns aux autres et mobiles radialement de manière synchrone.

15. Appareil (100) selon l'une quelconque des revendications 8 à 14, comprenant, dans chacune des zones axialement opposées par rapport au support de formation (50), un dispositif de transfert respectif (70) configuré pour être couplé de manière sélective audit élément de support annulaire (60) et axialement mobile par rapport audit support de formation (50).
